# FASCICULE DE BREVET EUROPEEN

(11) **EP 3 189 013 B1**
(45) Date de publication et mention de la délivrance du brevet: **17.11.2021**
(21) Numéro de dépôt: 15767319.5
(22) Date de dépôt: 03.09.2015
(51) Int. Cl.: C02F 1/44, C02F 1/60, C02F 1/66, C02F 5/06, C02F 1/26, C02F 1/46, C02F 103/08

(54) **PRE-TRAITEMENT D'EAUX CHAUDES SURSATUREES**
VORBEHANDLUNG VON ÜBERSÄTTIGTEM WARMWASSER
PRE-TREATMENT OF SUPERSATURATED WARM WATER

(30) Priorité: 05.09.2014 FR 1458329
(43) Date de publication de la demande: 12.07.2017
(73) Titulaire: Suez International, 92040 Paris la Défense Cedex (FR)
(72) Inventeur: DANIEL, Loïc, F-92500 Rueil Malmaison (FR)
(74) Mandataire: IPAZ
(86) Numéro de dépôt international: PCT/IB2015/056700
(87) Numéro de publication internationale: WO 2016/035030

(56) Documents cités:
- BE-A1- 905 273
- JP-A- 2002 018 437
- US-A- 4 574 049
- US-A1- 2011 062 079
- US-A1- 2012 255 904
- US-B1- 7 520 993
- None

## Description

La présente invention a pour objet un procédé de dessalement par osmose inverse d'eaux chaudes comprenant un pré-traitement chimique desdites eaux préalable au traitement par osmose inverse.

L'osmose inverse est un des procédés les plus utilisés pour la préparation d'eau potable à partir d'eau souterraine ou de surface, notamment à partir d'eau de mer salée.

**Le document Boysen** « Hot water reverse osmosis in Goodyear, AZ », Water Technology Conférence et Exposition 2008 ; XP008173273, ISBN 978-1-60560-5**, propose et compare deux installations de dessalement d'eaux sursaturées par osmose inverse dont l'eau a une température différente. En effet, l'eau souterraine passant dans l'une des installations atteint des températures comprises entre 39,44°C et 41,67°C tandis que les températures sont comprises entre 25°C et 26,67°C pour la seconde. En particulier, la première installation permet de dessaler des eaux sursaturées dont la température avoisine 40°C et met en œuvre le procédé comprenant les étapes suivantes** :
- **pompage et amenée de l'eau sursaturée souterraine jusqu'à un filtre pour éliminer les matières en suspension,**
- **injection d'un séquestrant dans la canalisation d'amenée,**
- **pompage de l'eau prétraitée au moyen d'une pompe d'alimentation de la membrane d'osmose inverse,**
- **stockage de l'eau traitée par la membrane d'osmose inverse dans un réservoir spécifique après mélange de cette eau traitée avec une deuxième eau potable provenant d'une source, et**
- **délivrance de l'eau potable aux consommateurs après désinfection par ajout de chlore.**

Ainsi plusieurs installations existent pour traiter de telles eaux chaudes sursaturées sur osmose inverse, notamment en Arabie Saoudite. Elles sont jusqu'à présent toutes conçues suivant la succession des étapes ci-dessous :
1. pompage dans la nappe phréatique,
2. refroidissement par des aéro-réfrigérants en vue d'abaisser la température de l'eau à un niveau acceptable par les membranes d'osmose inverse,
3. éventuellement une étape complémentaire combinant décarbonatation et/ou adoucissement et/ou désiliciage et/ou déferrisation, afin d'améliorer le rendement de l'osmose inverse,
4. ensuite une étape de filtration en un ou deux étages, afin de retenir les particules les plus fines qui risqueraient de colmater les membranes d'osmose inverse,
5. une injection de réactif chimique dit « séquestrant » qui permet d'améliorer le rendement de l'osmose inverse,
6. une étape de filtre à cartouche, avec un seuil de coupure nominal en général de 5 à 10 micromètres (mais pouvant, suivant les choix de conception, être au-dessus ou en-dessous de cette fourchette). Cette étape agit en protection contre des arrivées accidentelles de matières en suspension,
7. enfin l'étape d'osmose inverse, qui permet de dessaler l'eau jusqu'au niveau requis pour l'usage qui en sera fait.

Il est bien sûr concevable d'utiliser des échangeurs de chaleur sans perte de CO2, mais ils se révèlent beaucoup plus coûteux que des aéro-réfrigérants ouverts (qui prélèvent une partie de l'eau à traiter pour obtenir le refroidissement souhaité) et sont donc économiquement disqualifiés dès que le débit à traiter est supérieur à quelques m³/h.

Pour limiter ou éviter la précipitation de carbonate, il est parfois procédé à l'injection d'un acide et/ou d'un séquestrant en amont des tours de refroidissement et parfois aussi, en complément, ces mêmes acides et séquestrant sont injectés en amont de la filtration. Dans les deux cas ces ajouts de réactifs ont pour objectif de diminuer le potentiel de précipitation lors du passage dans les tours de refroidissement et les filtres, et ainsi de protéger ces équipements contre l'accumulation dommageable de matières.

Toutefois ces solutions présentent de gros inconvénients liés à la précipitation de certains ions présents dans ces eaux chaudes.

En effet, ces eaux à dessaler sont d'origine souterraine, et proviennent notamment de nappes contenues dans des réservoirs aquifères.

Elles répondent donc, comme toutes les eaux naturelles, à l'équilibre dit calco-carbonique qui régit les équilibres entre les ions Ca²⁺, HCO₃⁻, CO₃²⁻, H⁺, OH⁻, ainsi que des espèces CO₂ et CaCO₃, suivant des lois d'équilibre connues, chacune régie par une constante qui peuvent être représentées par les équations simplifiées ci-après :
[1] CO₂ + OH⁻ <=> HCO₃⁻
[2] HCO₃⁻ <=> H+ + CO₃²⁻
[3] Ca²⁺ + CO₃²⁻ <=> CaCO₃

De ce fait, lors du passage dans l'aéro-réfrigérant la perte de CO₂ provoque une montée du pH, qui dépasse alors le pH d'équilibre. Afin de retrouver une situation d'équilibre dans ces nouvelles conditions, l'eau aura tendance à produire des ions carbonate CO₃²⁻ à partir des ions bicarbonates HCO₃⁻ suivant [2]. Mais ce carbonate supplémentaire provoque alors le déplacement de l'équilibre [3] vers l'apparition de carbonate de calcium CaCO₃, qui est insoluble et donc précipite.

Par ailleurs l'apport d'oxygène dans cette eau qui en est dépourvue provoque l'oxydation et la précipitation rapide du fer, généralement présent en quantité variable, pouvant aller jusqu'à quelques mg/l de fer. Si le fer précipitait seul il serait en grande partie lessivé par l'eau de la tour, mais quand le carbonate de calcium précipite, le précipité de fer tend à s'y joindre, ce qui augmente plus encore la charge de colmatage dans la tour de refroidissement.

La précipitation et l'accumulation de précipités dans la structure d'échange de la tour de refroidissement présentent deux inconvénients majeurs :
1. l'alourdissement de la structure, conséquence la plus grave ; la structure peut même casser si elle n'est pas nettoyée à temps. Ce nettoyage périodique réduit la disponibilité du système.
2. une perte de rendement de refroidissement, qui peut obliger à réduire le débit de l'installation.

La précipitation et l'accumulation de précipités dans le filtre provoquent :
1. le blocage des équipements mobiles (vannes, pompes),
2. la prise en masse du matériau filtrant, ce qui compromet son action filtrante et son lavage journalier automatisé et
3. l'accumulation de matières colmatantes, ce qui réduit la durée des cycles et dégrade la qualité de l'eau dirigée vers l'unité d'osmose inverse.

Une acidification en amont de la tour est parfois utilisée pour réduire le bicarbonate initialement présent et donc le potentiel de formation du carbonate. Mais avec des eaux contenant typiquement 3 milliéquivalent de bicarbonate cela représente une consommation d'acide chlorhydrique pouvant atteindre jusqu'à 110 mg/l d'HCl, soit près de 300 mg/l en acide commercial à 38%, ce qui représente un coût d'exploitation significatif ainsi que des difficultés de stockage. Par ailleurs la conversion (récupération) du système d'osmose inverse en aval profite très peu de cette élimination car la teneur en calcium n'est pas réduite et le risque de précipitation par sulfate de calcium demeure alors le facteur limitant pour la récupération par l'osmose inverse.

Il est parfois aussi utilisé un produit séquestrant qui va limiter ou retarder la précipitation dans la tour de refroidissement. Mais ce produit est assez coûteux, son application à cet endroit est encore empirique et il peut présenter des effets secondaires néfastes au niveau de la filtration en détériorant l'efficacité d'élimination des matières en suspension du filtre. Il est possible aussi que le produit séquestrant perde son efficacité au contact de la masse d'échange dans la tour de refroidissement ou de la masse filtrante dans le filtre, ce qui peut occasionner des post-précipitations préjudiciables à ces systèmes.

Ainsi les principaux inconvénients des procédés appliqués jusqu'à présent sont donc :
1. un risque important de précipitation de carbonate de calcium et de fer dans la tour de refroidissement et dans l'étape de filtration qui la suit,
2. une perte de rendement de refroidissement de la tour dû aux précipités accumulés,
3. une forte augmentation de la fréquence de maintenance de la tour de refroidissement, ce qui entraîne son usure accélérée et une perte de disponibilité,
4. un risque de dommages mécaniques à la tour de refroidissement si la maintenance n'est pas effectuée à temps,
5. une perte de performance de l'étape de filtration due aux précipités accumulés au cours d'un cycle,
6. un risque de prise en masse du média filtrant, de blocage des vannes du filtre et de bouchage et d'inactivation des capteurs du filtre,
7. des risques accrus de contamination de la membrane d'osmose inverse et
8. un coût élevé dû aux réactifs utilisés pour limiter ou éliminer la précipitation.

Il y a donc un besoin de disposer d'un procédé qui permette de diminuer voire d'éviter la précipitation et l'accumulation de précipités dans la structure d'échange de la tour de refroidissement et dans le filtre.

Or les inventeurs ont découvert qu'en plaçant une étape de désaturation avant tout refroidissement, il était possible de diminuer voire d'éliminer les problèmes de précipitation.

**Dans** US-A-2012255904 **est décrit un procédé de récupération de pétrole ou de gaz et de traitement de l'eau résultante. L'eau produite par ce procédé de récupération de pétrole ou de gaz est une eau dure contenant des matières organiques, de la silice, des solides dissous et des solides en suspension dans lequel on réalise un procédé d'adoucissement de l'eau comprenant les étapes dans l'ordre suivant**
**(a) entrée de l'eau dans un système d'adoucissement (20) contenant une succession de cuves (21, 23, 25, 27) dans lesquelles le pH des eaux usées est augmenté à au moins 10,5 afin de former des cristaux** ;
**(b) la filtration desdits cristaux formés par une membrane de filtration (30) ;**
**(c) le retrait de calcium et de magnésium résiduels par une unité échangeuse d'ions (40) ;**
**(d) le dessalement de l'effluent par au moins une membrane d'osmose inverse (60) grâce à laquelle les matières organiques, les solides dissous et le bore sont retirés.**

**Dans** US 7 520 993 **est décrit une méthode et un système pour traiter un liquide aqueux contenant des minéraux dissous et des hydrocarbures dissous. La méthode de traitement d'un liquide aqueux comprend les étapes dans l'ordre suivant :**
**(a) entrée de l'eau dans un adoucisseur à chaux chaude dans lequel le pH est d'environ 11 ;**
**(b) ajustement du pH de l'effluent provenant du puits de nettoyage de l'adoucisseur à un pH compris entre 9 et 9,6 ;**
**(c) refroidissement de l'eau entre 35°C et 93°C par le système de refroidissement ;**
**(d) microfiltration et passage de l'effluent par un adoucisseur échangeur d'ions ;**
**(e) passage de l'eau au travers au moins un système d'osmose inverse.**

**Dans** US-A-4 574 049**, on décrit un procédé de purification d'eaux municipales dans lequel un système d'osmose inverse est mis en œuvre et qui comprend les étapes dans l'ordre suivant :**
**(a) la filtration de l'eau au travers d'un filtre de carbone, d'une unité d'adoucissement et d'une cartouche filtrante ;**
**(b) le passage au travers un système d'osmose inverse composé d'au moins deux membranes;**
**(c) le traitement chimique par ajout préférentiel d'une base via la ligne de traitement;**
**(d) le passage au travers d'un système d'osmose inverse.**

**Le document** BE 905 273 **décrit un dispositif pour l'épuration des eaux et produire des eaux stériles comprenant dans l'ordre suivant :**
**(a) une installation d'adoucissement;**
**(b) un appareil d'osmose inverse ;**
**(c) un perméateur;**
**(d) un déminéralisateur.**

**Le document** US-A-2011062079 **décrit une méthode de traitement des eaux contenant de la matière organique comprenant les étapes dans l'ordre suivant :**
**(a) prétraitement de l'eau permettant l'obtention d'un effluent primaire ;**
**(b) nanofiltration ou osmose inverse de l'effluent primaire à partir de laquelle on obtient : un perméat et un flux de concentré ;**
**(c) traitement intermédiaire du flux de concentré pour retirer ou précipiter la matière organique, lequel peut être : un traitement biologique ou un traitement physicochimique tel que la décarbonatation ou l'adoucissement ;**
**(d) nanofiltration ou osmose inverse du flux de concentré traité à partir de laquelle on obtient : un perméat et l'eau traitée.**

**Le document** JP 2002 018437 **décrit un procédé de traitement d'eau de soufflage d'un système de refroidissement par eau, contenant du calcium et de la silice dans lequel une étape de décarbonatation est préalable à une étape d'osmose** inverse. Le document AU201001962 A1 décrit un procédé de dessallement d'eau naturelle profonde en vue de la production d'eaux destinée à la consommation humaine.

Aussi la présente invention a pour objet un procédé de dessalement d'eau par osmose inverse comprenant une étape de désaturation préalablement aux étapes de refroidissement et de traitement par osmose inverse.

Au sens de la présente invention, on entend par « eau à dessaler », des eaux d'origine souterraine, et provenant de nappes contenues dans des réservoirs aquifères, et se caractérisant principalement par :
- une température supérieure à 40-45°C, de préférence inférieure à 80°C,
- un caractère saumâtre, c'est-à-dire que la somme des ions choisis parmi la liste calcium, magnésium, sodium, potassium, carbonates, bicarbonates, chlorures, sulfates ou un mélange de ceux-ci, est supérieure à 500 mg/l, et
- une teneur en CO₂ importante leur conférant un pH d'équilibre inférieur à 7,5, et de préférence inférieur à 7.

De façon optionnelle, ces eaux peuvent également comprendre les composés choisis parmi la liste:
- une teneur en fer supérieure à 50 µg/l,
- une teneur en manganèse supérieure à 25 µg/l,
- Une teneur en silice supérieure à 10 mg/l,
- soufre sous forme colloïdale ou sous forme d'hydrogène sulfuré à une teneur supérieure à10 µg/l,
- un ou plusieurs radionucléides, tels que le radium ou l'uranium, de sorte que l'activité alpha globale supérieure à 0.5 Bq/l, ou
- un mélange de ceux-ci,
en teneurs élevées.

Par exemple, une eau à dessaler saumâtre peut présenter les caractéristiques suivantes :

| | |
|---|---|
| Température | = 60°C |
| Calcium | = 360 mg/l |
| CO₂ | = 60 mg/l |
| pH | = 6,7 |
| HCO₃ | = 190 mg/l |
| Fer | = 3 mg/l |
| Manganèse | = 200 µg/l |
| Silice | = 15 mg/l |
| Activité Alpha globale | ≥ 0.5 Bq/l |

Conformément à l'invention, cette étape peut réalisée juste avant la filtration ou être séparée de l'étape de filtration par d'autres étapes comme par exemple une étape de refroidissement.

Cette étape de désaturation peut parfaitement se dérouler avec des eaux dont la température est supérieure à 40-45°C, ce qui présente d'ailleurs un avantage supplémentaire puisqu'à température plus élevée les vitesses des réactions chimiques concernées s'accélèrent, ce qui en améliore le rendement de précipitation dans l'ouvrage dédié et la solubilité du carbonate de calcium diminue, ce qui facilite l'élimination de ce sel jusqu'à des teneurs faibles, si cela est souhaité.

Dans un mode de réalisation avantageux de l'invention ladite étape de désaturation est soit une étape de décarbonatation, soit une étape d'adoucissement, soit une combinaison de ces deux étapes.

La décarbonatation consiste à réduire la teneur en bicarbonate. L'adoucissement consiste à réduire la teneur en calcium dissous. D'une manière industrielle la décarbonatation et l'adoucissement sont obtenus à la chaux car c'est un réactif peu coûteux. La soude est aussi parfois utilisée pour cette fin.

Les réactions sont les suivantes :
A la chaux : Ca²⁺ + Ca(OH)₂ + 2HCO₃⁻ -> 2CaCO₃ + 2H₂O
A la soude: Ca²⁺ + NaOH + HCO₃⁻ -> CaCO₃ + Na⁺ + H₂O

La simple décarbonation + adoucissement à la chaux (ou à la soude) seule est suffisante pour atteindre l'objectif de non précipitation sur les ouvrages en aval, tour de refroidissement et étape de filtration, mais ces étapes peuvent être complétées par un adoucissement au carbonate de calcium afin de tirer bénéfice de la présence de cette étape de clarification et ainsi augmenter la récupération de l'osmose inverse.

L'adoucissement seul consiste à permuter le calcium présent dans l'eau à traiter avec un autre ion très soluble qui ne présente donc pas de risque de précipitation. Le réactif le plus couramment utilisé est le carbonate de sodium :

Ca²⁺ + Na₂CO₃ -> CaCO₃ + 2Na⁺

La réaction de décarbonatation pourra être totale (élimination de tout le bicarbonate) ou partielle (abattement d'une fraction du bicarbonate). De même pour l'adoucissement avec l'élimination du calcium. Ces choix dépendront de la qualité de l'eau brute et des objectifs de traitement

L'homme du métier, à la lumière de ses connaissances générales saura faire le choix entre décarbonatation et/ou adoucissement en fonction de la qualité de l'eau à traiter et des objectifs de qualité en sortie des étapes d'aération et de récupération de l'osmose inverse. En général on procèdera à une décarbonatation et un adoucissement simultanés, à la chaux ou à la soude, les deux actions allant vers le même objectif de réduction du risque de précipitation du carbonate de calcium.

Dans un mode de réalisation avantageux de l'invention l'étape de décarbonatation est réalisée soit avec de la chaux, soit avec de la soude et l'étape d'adoucissement est réalisée soit à la chaux, soit à la soude, soit avec du carbonate de sodium.

Dans un autre mode de réalisation avantageux de l'invention une étape de désiliciage est réalisée simultanément à ladite étape de désaturation si la silice est un produit limitant pour l'étape d'osmose inverse ultérieure.

Conformément à l'invention, l'étape de désaturation est appliquée à des eaux dont la température est supérieure à 40-45°C. L'étape de désaturation est suivie d'une étape de refroidissement de l'eau à dessaler à une température de 40-45°C.

Conformément à l'invention, les réactions décrites ci-dessus peuvent se dérouler dans un réacteur conventionnel adapté, comme par exemple un réacteur à voile de boue ou un réacteur à recirculation de boues ; elles peuvent également être intégrées dans tout autre procédé existant permettant la mise en contact avec un matériau qui favorisera les précipitations.

Dans un mode de réalisation particulièrement avantageux de l'invention, le procédé comprend, dans cet ordre, les étapes suivantes :
a. une étape de désaturation,
b. éventuellement et simultanément à l'étape a) une étape de désiliciage, puis
c. éventuellement une étape de refroidissement de l'eau à 40-45°C et ensuite,
d. une étape de filtration (élimination des matières en suspension) et ensuite
e. une étape de dessalement par osmose inverse.

Dans un autre mode de réalisation qui est en dehors du champ de l'invention, la tour de refroidissement est positionnée en aval de la membrane d'osmose inverse permettant ainsi la réduction des coûts d'exploitation liés à l'encrassement de la tour de refroidissement, et de réduire les coûts d'investissement d'autre part grâce au positionnement de la tour sur la ligne du perméat dont le débit est plus faible que le débit d'alimentation.

Avantageusement, si les eaux à dessaler comprennent du radium, ce mode de réalisation permet la rétention des radionucléides, notamment le radium ou l'uranium, sur la membrane d'osmose inverse.

Ce refroidissement du perméat de l'osmoseur permet d'éviter de contaminer l'air ambiant avec du radon qui est un élément très volatil issu de la désintégration du radium 226.

Outre ces avantages économiques, un tel agencement a l'avantage d'éliminer le risque de contamination de l'atmosphère par le radon puisque l'élément radium sera retenu par les membranes d'osmose inverse avant passage du perméat sur la tour de refroidissement.

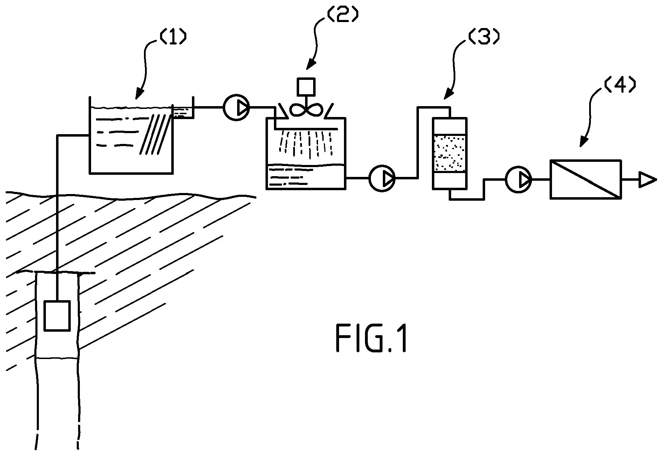

Afin de mieux faire comprendre le procédé objet de la présente invention, on en décrit ci-après :
- un mode de mise en œuvre. Au cours de cette description, on se réfère à la figure 1 des dessins annexés qui est un schéma illustrant les différentes étapes du procédé selon l'invention et
- un exemple de réalisation.

Il demeure bien entendu que ces exemples n'ont aucun caractère limitatif.

### Mode de mise en œuvre selon la figure 1

Les eaux brutes sont amenées dans une cuve (1) où elles sont soumises à une désaturation puis amenées vers une tour de refroidissement (2) avant d'être soumise à une filtration (3), puis à un dessalement par un système d'osmose inverse (4).

### Exemple de réalisation

Soit une eau de forage ayant les caractéristiques suivantes :

| | |
|---|---|
| • pH | 6,7 |
| • bicarbonate | 190 mg/l HCO₃⁻ |
| • calcium | 130 mg/l Ca²⁺ |
| • CO₂ | 60 mg/l |
| • température60°C | |

Le passage direct de l'eau brute dans la tour de refroidissement pourrait faire perdre jusqu'à 60 mg/l de CO₂ lors de traversée de cette dernière. En supposant une perte de seulement 55 mg/l de CO₂, le potentiel de précipitation du CaCO₃ est d'environ 24 mg/l, dont une partie s'accumulera dans la structure de la tour de refroidissement et dans l'étape de filtration.

Le taux de conversion de l'étape d'osmose inverse sera limité à 75% (avec l'usage d'un séquestrant).

En revanche, si on procède à une décarbonatation + adoucissement partiel à la chaux seule, en amont de la tour de refroidissement, conformément à la présente invention, une dose de 214 mg/l de Ca(OH)₂ (chaux) permettra de provoquer la formation de 446 mg/l de boues de CaCO₃ qui seront évacuées sous forme de suspension dans l'eau.

Les titres de l'eau en sortie de l'ouvrage de clarification seront alors de :
- Calcium = 75 mg/l sous forme de Ca²⁺
- Alcalinité inférieure à 0,6 meq/l (essentiellement sous forme de HCO₃⁻)
- pH entre 8,5 et 9,0

L'eau ainsi traitée ne contient plus de carbonate de calcium susceptible de précipiter dans la tour de refroidissement ou dans la filtration.

La capacité de conversion de l'osmose inverse sera augmentée jusqu'à 90%, voire plus, s'il n'y a pas d'autres sels limitant.

Ainsi, en mettant en œuvre l'étape de désaturation conformément à l'invention, la décarbonatation est totale mais l'adoucissement partiel car le titre en calcium est supérieur au titre en bicarbonate (y compris le bicarbonate formé par la réaction de la chaux avec le CO₂).

Dans l'hypothèse où le cas inverse se produirait, avec calcium < bicarbonate, on pourrait arriver à un adoucissement total et à une décarbonatation partielle. Dans ce cas il pourrait être souhaitable d'ajouter du carbonate de sodium afin de poursuivre la réaction d'adoucissement et d'obtenir un titre final plus faible.

Il est bien sûr possible, en limitant la dose de chaux de procéder à un moindre abattement à la fois du calcium et du bicarbonate.

On pourra aussi substituer la soude à la chaux. C'est un réactif plus coûteux mais qui génère moins de boues de carbonate de calcium pour un même résultat.

Dans l'hypothèse où la désaturation est réalisée seulement par un adoucissement celui-ci est réalisé avec un carbonate, généralement du carbonate de sodium.

Il est toujours possible de doser de l'acide en amont ou en aval de la tour de refroidissement afin d'ajuster l'alcalinité ou le pH. Là encore le choix dépendra des objectifs de traitement et l'homme du métier pourra utiliser ses connaissances générales pour définir les conditions optimales.

La présente invention trouve son application dans le traitement des eaux naturelles profondes, chaudes et présentant un potentiel de sursaturation du carbonate de calcium. Ce traitement s'applique pour des productions d'eaux destinées à la consommation humaine.

## Revendications

1. Procédé de dessalement d'eau naturelle profonde d'origine souterraine, provenant de nappes contenues dans des réservoirs aquifères, présentant un potentiel de sursaturation en carbonate de calcium, **caractérisé en ce qu'**il comprend dans cet ordre les étapes suivantes :
une étape de désaturation de l'eau présentant un potentiel de sursaturation en carbonate de calcium,
• ladite eau présentant
- une température supérieure à 40-45°C,
- comprenant du calcium, des carbonates, des bicarbonates et des composés choisis parmi le magnésium, le sodium, le potassium, les chlorures, les sulfates ou un mélange de ceux-ci, dont la teneur totale est au moins égale à 500 mg/l
- une teneur en CO₂ importante leur conférant un pH d'équilibre inférieur à 7,5,
une étape de refroidissement de l'eau désaturée à une température de 40—45°C dans une tour de refroidissement aéro-réfrigérante,
et,
une étape de dessalement par osmose inverse, pour des productions d'eaux destinées à la consommation humaine.

2. Procédé selon la revendication 1 **caractérisé en ce que** ladite étape de désaturation est soit une étape de décarbonatation, soit une étape d'adoucissement, soit une combinaison de ces deux étapes.

3. Procédé selon la revendication 2, **caractérisé en ce que** l'étape de décarbonatation est réalisée soit avec de la chaux, soit avec de la soude.

4. Procédé selon l'une quelconque des revendications précédentes **caractérisé en ce que** l'étape d'adoucissement est réalisée soit avec de la chaux, soit avec de la soude, soit avec du carbonate de sodium.

5. Procédé selon l'une quelconque des revendications précédentes **caractérisé en ce qu'**il comprend, dans cet ordre, les étapes suivantes :une étape de désaturation,
éventuellement et simultanément à ladite étape de désaturation de l'étape a) une étape de désiliciage, puis
une étape de refroidissement de l'eau à 40-45°C et ensuite,
une étape de filtration (élimination des matières en suspension) et ensuite
une étape de dessalement par osmose inverse.

6. Procédé selon l'une quelconque des revendications précédentes **caractérisé en ce que** les eaux à dessaler comprennent en outre les composés choisis parmi le Fer, le Manganèse, la Silice, le Soufre ou un mélange de ceux-ci.

7. Procédé selon l'une quelconque des revendications précédentes **caractérisé en ce que** les eaux à dessaler comprennent des radionucléides.

8. Procédé selon l'une quelconque des revendications précédentes **caractérisé en ce que** le perméat desdites eaux à dessaler est refroidi après son passage en membrane d'osmose-à une température au moins inférieure à 40°C.

## Patentansprüche

1. Verfahren zur Entsalzung von tiefem natürlichem Wasser unterirdischen Ursprungs, das aus in Grundwasservorkommen enthaltenem Aquifer stammt und ein Potential zur Übersättigung mit Calciumkarbonat aufweist, **dadurch gekennzeichnet, dass** das Verfahren die folgenden Schritte in dieser Reihenfolge umfasst:
einen Schritt zur Entsättigung des Wassers, das ein Potential zur Übersättigung mit Calciumkarbonat aufweist,
µ wobei das Wasser
- eine Temperatur über 40-45 °C aufweist,
- Calcium, Carbonate, Bicarbonate und Verbindungen ausgewählt aus Magnesium, Natrium, Kalium, Chloriden, Sulfaten oder einer Mischung davon enthält, deren Gesamtgehalt mindestens 500 mg/I beträgt,
- einen hohen CO₂-Gehalt aufweist, was dem Wasser einen Gleichgewichts-pH-Wert unter 7,5 verleiht,
einen Schritt zur Abkühlung des entsättigten Wassers auf eine Temperatur von 40-45 °C in einem Luftkühlturm,
und,
einen Schritt zur Entsalzung durch Umkehrosmose zur Herstellung von Wasser für den menschlichen Verzehr.

2. Verfahren nach Anspruch 1, **dadurch gekennzeichnet, dass** der Schritt zur Entsättigung entweder ein Schritt zur Entcarbonisierung oder ein Schritt zur Enthärtung oder eine Kombination dieser beiden Schritte ist.

3. Verfahren nach Anspruch 2, **dadurch gekennzeichnet, dass** der Schritt zur Entcarbonisierung entweder mit Kalk oder Soda durchgeführt wird.

4. Verfahren nach einem der vorstehenden Ansprüche, **dadurch gekennzeichnet, dass** der Schritt zur Enthärtung entweder mit Kalk, mit Soda oder mit Natriumcarbonat durchgeführt wird.

5. Verfahren nach einem der vorstehenden Ansprüche, **dadurch gekennzeichnet, dass** das Verfahren die folgenden Schritte in dieser Reihenfolge umfasst:
einen Schritt zur Entsättigung,
optional und gleichzeitig mit dem Schritt der Entsättigung von Schritt a) einen Schritt zur Entsilikonisierung, dann
einen Schritt zur Abkühlung des Wassers auf 40-45 °C, und dann einen Schritt zur Filtration (Entfernung von Schwebstoffen), und anschließend einen Schritt zur Entsalzung durch Umkehrosmose.

6. Verfahren nach einem der vorstehenden Ansprüche, **dadurch gekennzeichnet, dass** das zu entsalzende Wasser ferner Verbindungen enthält, die aus Eisen, Mangan, Siliziumdioxid, Schwefel oder einer Mischung davon ausgewählt sind.

7. Verfahren nach einem der vorstehenden Ansprüche, **dadurch gekennzeichnet, dass** das zu entsalzende Wasser Radionuklide enthält.

8. Verfahren nach einem der vorstehenden Ansprüche, **dadurch gekennzeichnet, dass** das Permeat des zu entsalzenden Wassers nach seinem Durchgang durch die Osmosemembran auf eine Temperatur von mindestens unter 40 °C abgekühlt wird.

## Claims

1. A method for desalination of deep natural water of subsurface origin originating from groundwater contained in aquifere compartments having a potential of supersaturation in calcium carbonate, **characterized in that** it comprises in this order, the following steps:
a step of desaturating the water having a potential of supersaturation in calcium carbonate,
said water having :
- a temperature higher than 40-45°C,
- comprising calcium, carbonates, bicarbonates and compounds selected from magnesium, sodium, potassium, chlorides, sulfates or a mixture thereof, the total content of which is at least equal to 500 mg/l,
- a CO₂ content important to give an equilibrium pH of less than 7,5,
a step of cooling the desaturated water to a temperature of 40-45°C in an open cooling tower ; and
a step of desalination by reverse osmosis treatment, to produce waters intended for human consumption.

2. Method according to claim 1, **characterized in that** said desaturation step is a decarbonatation step, a softening step or a combination thereof.

3. Method according to claim 2, **characterized in that** the decarbonatation step is carried out either with lime or with sodium hydroxide.

4. Method according to any preceeding claims, **characterized in that** the softening step is carried out with lime, sodium hydroxide, or sodium carbonate.

5. Method according to any preceding claims, **characterized in that** it comprises, in this order, the following steps:
a desaturation step,
optionally and simultaneously with said step of the desaturation step of the step a), a desilication step, then
a step of cooling the water to 40-45°C and subsequently
a filtration step (removal of suspended matter) and subsequently a step of desalination by reverse osmosis.

6. Method according to any of the preceding claims,
**characterized in that** the waters for desalination further comprise compounds selected from iron, manganese, silica, sulfur or a mixture thereof.

7. Method according to any of the preceding claims, **characterized in that** the waters for desalination comprise radionuclides.

8. Method according to any of the preceding claims, **characterized in that** the permeate of said waters for desalination is cooled following its osmosis membrane traversal to a temperature at least less than 40°C.
